# EUROPÄISCHE PATENTSCHRIFT

(11) **EP 1 392 466 B1**
(45) Veröffentlichungstag und Bekanntmachung des Hinweises auf die Patenterteilung: **16.03.2005**
(21) Anmeldenummer: 02742746.7
(22) Anmeldetag: 15.05.2002
(51) Int. Cl.: B23K 9/20

(54) **VERFAHREN ZUR ÜBERWACHUNG DES SCHWEISSVORGANGS BEIM BOLZENSCHWEISSEN UND MESS- UND AUSWERTEEINRICHTUNG ZUR DURCHFÜHRUNG DES VERFAHRENS**
METHOD FOR MONITORING A WELDING PROCESS DURING THE WELDING OF STUDS AND MEASURING AND SORTING DEVICE FOR CARRYING OUT SAID METHOD
PROCEDE DE CONTROLE DU PROCESSUS DE SOUDAGE LORS DU SOUDAGE DE GOUJONS ET DISPOSITIF DE MESURE ET DE DEPOUILEMENT DESTINE A LA MISE EN OEUVRE DE CE PROCEDE

(30) Priorität: 16.05.2001 DE 10124088
(43) Veröffentlichungstag der Anmeldung: 03.03.2004
(73) Patentinhaber: Nelson Bolzenschweiss-Technik GmbH & Co. KG, 58285 Gevelsberg (DE)
(72) Erfinder: MADSAK, Jürgen, 58339 Breckerfeld (DE); CITRICH, Ulrich, 58285 Gevelsberg (DE); KIRCHNER, Eduard, 77656 Offenburg (DE)
(74) Vertreter: Eder, Christian, Dipl.-Ing.
(86) Internationale Anmeldenummer: PCT/DE2002/001738
(87) Internationale Veröffentlichungsnummer: WO 2002/092271

(56) Entgegenhaltungen:
- EP-A- 0 816 005
- WO-A-01/76800
- DE-A- 4 314 528
- DE-A- 4 437 264
- DE-U- 20 006 636
- US-A- 5 977 506

## Beschreibung

Die Erfindung betrifft ein Verfahren zur Überwachung des Schweißvorgangs beim Bolzenschweißen sowie eine Mess- und Auswerteeinrichtung zur Durchführung des Verfahrens mit den Merkmalen der Oberbegriffe der Patentansprüche 1 und 5 (siehe, z.B., DE-A-43 14 528).

Beim Bolzenschweißen ist es erforderlich, zur Erreichung einer möglichst guten Schweißqualität die Sollwerte relevanter Schweißparameter mit entsprechender Genauigkeit einzuhalten. Beim Hubzündungs- und artverwandten Verfahren, auf das sich die vorliegende Erfindung bezieht, sind insbesondere die Parameter Schweißstrom, Schweißzeit, Überstand, Abhub und Eintauchdämpfung für die Qualität der Schweißverbindung zwischen Bolzen und Werkstück maßgebend.

Während die Messung und Überwachung der elektrischen Parameter, nämlich des Schweißstroms und der Schweißspannung seit längerer Zeit bekannt und üblich ist, wurde insbesondere beim Hubzündungsverfahren die Einhaltung der mechanischen Parameter, wie die Einhaltung des Überstands, des Abhubs und der Eintauchdämpfung, nur durch die entsprechende Voreinstellung dieser Parameter am Bolzenschweißgerät bzw. am entsprechenden Schweißkopf gewährleistet.

Nachteilig hierbei ist jedoch, dass die Bewegung des in den Schweißkopf eingesetzten Bolzens bekannter Bolzenschweißvorrichtungen nicht überwacht wird und demzufolge auftretende Abweichungen der Bewegungen von vorbestimmten Soll-Werten nicht erkannt werden. Das heißt, negative Beeinflussungen der Schweißqualität durch die Nichteinhaltung eines voreingestellten Überstands oder Abhubs bzw. Abweichungen von der Soll-Eintauchdämpfung werden nicht erkannt.

Zur Lösung des entsprechenden Problems beim Spitzenzündungs-Schweißverfahren wird daher in der deutschen Patentschrift DE 41 24 511 C1 vorgeschlagen, den Ist-Wert der Eintauchgeschwindigkeit des Schweißbolzens in das am Schweißpunkt des Werkstücks erzeugte Schweißbad zu messen und mit einem empirisch ermittelten Geschwindigkeits-Soll-Wert zu vergleichen. Außerhalb eines vorgegebenen Toleranzfeldes liegende Abweichungen des Ist-Wertes vom Soll-Wert zeigen dann die ungenügende Qualität der fertigen Schweißverbindung an. Da beim Spitzenzündungs-Schweißverfahren die Eintauchgeschwindigkeit der maßgebende Parameter für die Schweißqualität ist, wird in der DE 41 24 511 C1 vorgeschlagen, diesen Wert durch die Messung der Zeit zu bestimmen, die der Schweißbolzen zum Zurücklegen einer kurzen Wegstrecke Δs kurz vor seinem Eintauchen in die Schmelze des Werkstücks benötigt.

Beim Hubzündungs-Schweißverfahren hängt die Qualität einer Schweißverbindung jedoch nicht nur allein von der Eintauchgeschwindigkeit, sondern auch von der Eintauchdämpfung ab, d.h. maßgebend ist der zeitliche Verlauf der Bewegung des Bolzens bzw. der zeitliche Verlauf der Bolzengeschwindigkeit ab dem Zeitpunkt seines Eintauchens in die Schmelze. Darüber hinaus ist es wünschenswert, auch die Einhaltung der voreingestellten Parameter Überstand und Abhub zu überwachen, da diese sowohl die Bolzengeschwindigkeit während seiner Eintauchphase in die Schmelze als auch das Verhalten des Lichtbogens beeinflussen.

Aus der DE 39 29 669 A1 und der DE 43 07 325 A1 sind jeweils Bolzenschweißvorrichtungen bekannt, deren Ziel darin liegt, eine Bewegung der Pinole bzw. des Bolzenhalters möglichst exakt entsprechend eines vorgegebenen Verlaufs zu bewirken. Hierzu ist bei der Vorrichtung gemäß der DE 39 29 669 A1 ein Regelmagnet mit einer Wegmessvorrichtung und einer elektronischen Steuerung verbunden, um auf diese Weise den Ist-Wert des Stellwegs des Ankers des Regelmagneten zu erfassen, mit einem Soll-Wert zu vergleichen und eine Regelung der Bewegung des Ankers, mit welchem die Pinole verbunden ist, zu bewirken. Bei der Vorrichtung gemäß der DE 43 07 325 A1 erfolgt die Bewegung der Pinole bzw. des Bolzenhalters der Schweißpistole mittels eines Hubmagneten, der als gesteuerte Bremse wirkt, wodurch keine weiteren Dämpfungseinrichtungen erforderlich sind. Nachteilig bei diesen Vorrichtungen ist jedoch, dass eine ungenügende Schweißqualität fertiger Schweißungen nicht erkennbar ist, wenn - aus welchen Gründen auch immer - der Schweißablauf von einem idealen bzw. vorbestimmten Ablauf abweicht.

In der DE 43 14 528 C2 wird deshalb vorgeschlagen, den zeitlichen Verlauf der Bewegung des Bolzens in Richtung auf das Werkstück, zumindest während der gesamten Bewegungsphase des Eintauchens des Bolzens in die Schmelze des Werkstücks, kontinuierlich zu messen. Hierdurch lassen sich Abweichungen des gemessenen Verlaufs der Bewegung oder des daraus bestimmten zeitlichen Verlaufs der Bewegungsgeschwindigkeit von einem vorbestimmten Soll-Verlauf ermitteln.

In der Praxis entstand trotz dieses bewährten Verfahrens, insbesondere beim Aluminiumschweißen, der Wunsch nach exakteren und detaillierten Aussagen über die Qualität und Güte einer Schweißung.

Der Erfindung liegt daher die Aufgabe zugrunde, ein Verfahren zur Überwachung des Schweißvorgangs beim Bolzenschweißen zu schaffen, welches die Kontrolle der Qualität einer fertiggestellten Schweißverbindung verbessert und die Empfindlichkeit bzw. die Genauigkeit der Qualitätskontrolle erhöht. Des Weiteren ist es Aufgabe der Erfindung, eine Mess- und Auswerteeinrichtung zur Durchführung dieses Verfahrens zu schaffen.

Die Erfindung löst diese Aufgabe mit den Merkmalen der Patentansprüche 1 und 5.

Durch das analoge oder digitale (kontinuierlich oder mit vorgebbarer Abtastfrequenz diskret) Erfassen bzw. das Messen der aufzuwendenden Kraft - bzw. einer hierzu in rechnerischer eindeutiger Abhängigkeit stehenden physikalischen Größe - für die Bewegung des Teils (beispielsweise Pinole einer Schweißpistole oder Schweißachse eines Schweißkopfs) zumindest über die Zeit der Eintauchphase des zu verschweißenden Teils bzw. des Bolzens in die Schmelze ist es nun möglich, den Eintauchvorgang detaillierter zu überwachen, wobei selbst Parameter wie Viskosität der Schmelze usw. in eine Qualitätsaussage der Schweißung einfließen, da die aufzuwendende Kraft bei geringerer Viskosität steigt. Für eine Beurteilung der Qualität der Schweißung wird hierzu der gemessene Kraftverlauf mit einem vorbestimmten Soll-Verlauf verglichen. Auf diese Weise lassen sich Ist-Kurven ermitteln, die auch bei geringer Wegänderung im Vergleich zu einer Wegmessung (Weg-Zeitkurve) wesentlich empfindlichere und deshalb detailliertere bzw. exaktere Aussagen über diese wichtige Phase eines Schweißvorgangs liefern. Insbesondere ist es möglich, die Qualität einer Schweißung anhand eines Vergleichs mit einer ermittelten Sollkurve mit eventuell zusätzlicher Toleranz zu beurteilen und sichere Aussagen darüber zu treffen, ob die vorgenommene Schweißung den vorgegebenen Anforderungen genügt.

Die aufzuwendende Kraft ist hierbei über ein hiervon abhängiges Signal, nämlich die Leistungsaufnahme des elektrischen Antriebs des beweglichen Teils bzw. der Pinole (Schweißachse) ermittelt werden. Selbstverständlich ist es denkbar, die aufzuwendende Kraft auch über ein hierzu in Abhängigkeit stehendes Signal, welches mittels anderer Sensoren (beispielsweise mechanisch, optisch oder elektrisch) gewonnen wird, und entsprechender Auswertung zu ermitteln.

Vorteilhafterweise benötigt eine Schweißvorrichtung mit einem elektrischen, insbesondere servoelektrischen Antrieb keinen zusätzlichen Sensor, da hierbei bereits ein Signal, nämlich die elektrische Leistungsaufnahme des Antriebs, vorhanden ist und nur noch einer entsprechenden Mess- und Auswerteeinrichtung zugeführt werden muss. Hierbei können sogar bereits existierende Bolzenschweiß-Vorrichtungen auf einfache Art und Weise nachgerüstet werden, da das Abgreifen des Stroms und/oder der Spannung des elektrischen Antriebs unkompliziert zu bewerkstelligen ist und alte Mess- und Auswerteeinrichtungen ersetzt, nachgerüstet oder neue Mess- und Auswerteeinrichtungen hinzugefügt werden können.

Selbstverständlich ist es ausreichend, nur ein Signal bzw. einen Parameter, zu dem die aufzuwendende Kraft in eindeutiger Abhängigkeit steht, zu erfassen und zu überwachen.

So genügt beispielsweise bei konstanter Spannung das Erfassen bzw. Messen der Stromaufnahme des elektrischen Antriebs, da die Kraft direkt von der Leistungsaufnahme und diese wiederum bei konstanter Spannung von der Stromaufnahme abhängig ist.

In bevorzugter Ausgestaltung der Erfindung kann bei einem Überschreiten vorgegebener Toleranzen ein Fehlersignal erzeugt und der Fehler optisch oder akustisch angezeigt werden. Diese Anzeige kann, beispielsweise bei Handgeräten, vorteilhafterweise am Schweißkopf bzw. an der Schweißpistole mittels einer Anzeigeeinrichtung oder an einem beliebigen anderen Ort der Schweißvorrichtung bis hin zu einer zentralen Anzeige erfolgen.

In weiterer Ausgestaltung der Erfindung können der Soll-Verlauf und/oder die vorgegebenen Toleranzen von der während des Schweißvorgangs zugeführten Energie, insbesondere Schweißstrom, und weiteren Parametern wie Dicke, Material des Werkstücks, Bolzentyp (Dicke, Material, Länge, Form, Querschnitt), usw. abhängig sein. Derartige Soll-Verläufe können rechnerisch oder empirisch in Versuchen ermittelt werden und auswähl- und abrufbar in einem Datenspeicher, insbesondere der Mess- und Auswerteeinrichtung, abgelegt werden.

In weiterer Ausgestaltung der Erfindung wird der gemessene zeitliche Verlauf der Kraft protokolliert und/oder gespeichert, so dass die Information über die Qualität der Schweißung nicht nur während oder kurz nach einem Schweißvorgang (z.B. mittels Zwischenspeicher) zur Verfügung steht, sondern vorteilhafterweise zumindest stichprobenartig oder insgesamt festgehalten wird, um im nachhinein eine Aussage über einzelne oder alle Schweißungen zu treffen. So kann beispielsweise, insbesondere bei sicherheitsrelevanten Schweißungen, nachträglich anhand eines Schweißprotokolls die Güte bzw. die Qualität der Schweißung nachgeprüft bzw. nachgewiesen werden.

Zusätzlich ist es denkbar, die Bewegung des zu bewegenden Teils, insbesondere Pinole oder Schweißachse (wie beispielsweis in der DE 43 14 528 C2 vorgeschlagen) mit einer Wegmesseinrichtung zu erfassen und als weiterer Parameter (Eintauchtiefe, Abhubmaß, usw.) zusätzlich zu der aufgewandten Kraft hinsichtlich der Güte der Schweißung auszuwerten sowie zur Regelung der Bewegung heranzuziehen.

Als weiterer Parameter kann selbstverständlich auch die (negative) Beschleunigung bzw. das Abbremsen des zu bewegenden Teils, insbesondere während der Eintauchphase, für eine Verbesserung bei der Bewertung bzw. Auswertung der Güte der Schweißung zusätzlich herangezogen oder anstelle der vorstehend beschriebenen Parameter verwendet werden. Die negative Beschleunigung bzw. eine Beschleunigungskurve kann hierbei über eine Wegmesseinrichtung und entsprechende Differenzierung des gemessenen Weges über die Zeit berechnet oder vorteilhafterweise auf einfache und schnelle Weise mittels eines Beschleunigungsaufnehmers oder eines Beschleunigungssensors unmittelbarer während der Bewegung, insbesondere während der Eintauchphase, ermittelt werden.

Weiterhin ist es denkbar, die ermittelten Ist-Verläufe eventuell zusammen mit weiteren Parameterkurven, wie Weg-Zeit-Kurve, Schweißstromkurve, Lichtbogenspannungskurve, Beschleunigungskurve, usw. eines Schweißvorgangs, insbesondere der Eintauchphase und Parametern wie Abhubmaß, Typ des Werkstücks und des Bolzens usw. zu klassifizieren. Anhand einer solchen Klassifizierung ist es vorteilhafterweise möglich, Soll-Kurven für eine Prozesssteuerung bzw. Regelung zu ermitteln anhand welcher Schweißungen gesteuert werden können. Zu diesem Zweck kann die Mess- und Auswerteeinrichtung zusätzlich als Steuereinrichtung ausgebildet sein oder das ausgewertete Signal einer eigenständigen Steuereinrichtung zugeführt werden, welche die Steuerung des Antriebs der Schweißachse bzw. Pinole und/oder eines Roboterarms in Abhängigkeit des ausgewerteten Signals vornimmt und entsprechend vorgebbarer Sollwerte bzw. -kurven (im Vergleich mit jeweils detektierten Ist-Werten) regelt.

Weitere Ausbildungen des erfindungsgemäßen Verfahrens und der erfindungsgemäßen Vorrichtung ergeben sich aus den Unteransprüchen.

Die Erfindung wird nachfolgend anhand eines in der Zeichnung dargestellten Ausführungsbeispiels näher beschrieben.

In der Zeichnung zeigen:
- Fig. 1: eine schematische Darstellung einer Bolzenschweißvorrichtung nach der Erfindung;
- Fig. 2: ein Diagramm unterschiedlicher Signale während eines Schweißvorgangs mit einer Bolzenschweißvorrichtung nach Fig. 1 und
- Fig. 3: einen gedehnten Ausschnitt des Diagramms nach Fig. 2.

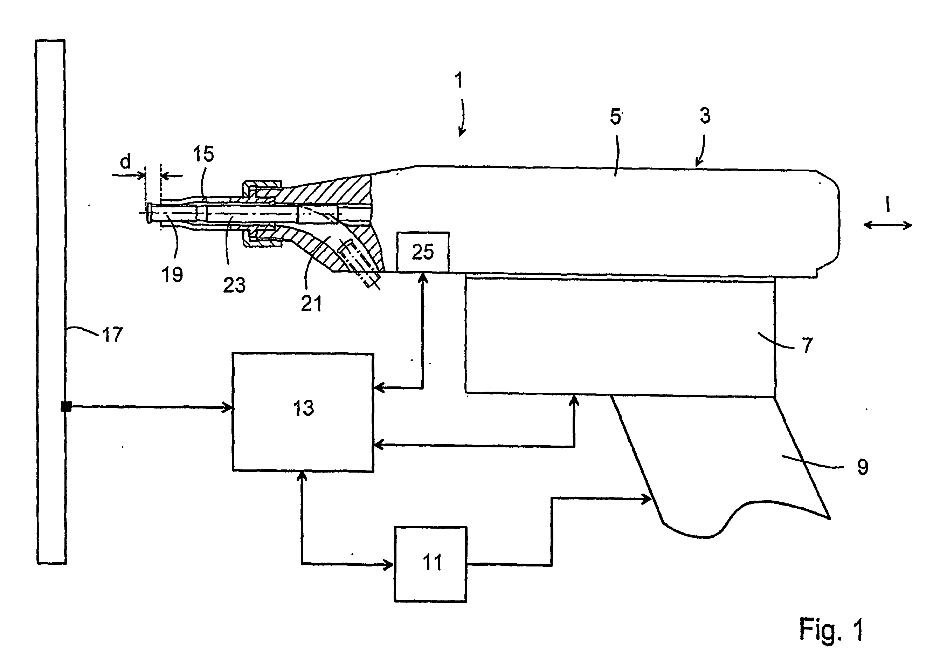

Fig. 1 zeigt eine Bolzenschweißvorrichtung 1, welche einen Bolzenschweißkopf 3 umfasst, welcher aus der eigentlichen Schweißachse 5 und einem elektrischen Antrieb 7, insbesondere einem servoelektrischen Antrieb, beispielsweise ein Linearmotor, zur axialen Bewegung der Schweißachse 5 (Pfeil I in Fig. 1) besteht.

Der gesamte Schweißkopf 3, welcher im Wesentlichen in an sich bekannter Weise als zur Durchführung des Hubzündungs-Schweißverfahrens geeigneter Schweißkopf ausgebildet ist, kann, wie in Fig. 1 angedeutet, an einem Roboterarm 9 angeordnet sein, mittels welchem der Schweißkopf 3 in einer oder mehreren räumlichen Achsen bewegbar ist.

Sowohl der Antrieb 7 für die Schweißachse 5 als auch ein Antrieb 11 für den Roboterarm 9 wird mittels einer Auswerte- und Steuereinheit 13 angesteuert.

Die Auswerte- und Steuereinheit 13 kann dabei zusätzlich (in nicht dargestellter Art und Weise) die weiteren Ansteuerungen des Schweißkopfs 3 hinsichtlich der Steuerung des Schweißstroms übernehmen. Da sich die vorliegende Erfindung im Wesentlichen auf eine Bewegung des Schweißkopfs 3 bzw. eines Bolzenhalters 15 der Schweißachse 5 bezieht, wurde auf eine Darstellung weiterer Komponenten der Bolzenschweißvorrichtung 1 verzichtet.

Fig. 1 zeigt des Weiteren ein Werkstück 17, auf welches ein im Bolzenhalter 15 gehaltenes zu verschweißendes Teil (Bolzen) 19 aufgeschweißt werden soll. Das Werkstück 17 steht in elektrischem Kontakt mit der Auswerte- und Steuereinheit 13. Dies ist zum einen für das Fließen eines Schweißstroms während des Schweißvorgangs erforderlich und zum anderen vorteilhaft, um einen elektrischen Kontakt 32 zwischen dem Bolzenhalter 15 bzw. dem zu verschweißenden Teil 19 und dem Werkstück 17 zu detektieren.

Fig. 1 zeigt des Weiteren, dass der Schweißachse 5 des Bolzenschweißkopfs 3 mittels einer nicht näher dargestellten automatischen Zuführvorrichtung zu verschweißende Teile 19 zugeführt werden können. Dies erfolgt mittels eines Zuführkanals 21 im vorderen Bereich des Schweißkopfs 3, welcher in üblicher Weise mittels eines Schlauchs (nicht dargestellt) mit der automatischen Zuführvorrichtung verbunden ist.

Das Zuführen eines zu verschweißenden Teils 19 erfolgt mittels Blasluft, wodurch das zu verschweißende Teil über den Zuführkanal 21 in den vorderen Bereich des Bolzenschweißkopfs 3 bewegt wird. In dieser Lage befindet sich das zu verschweißende Teil bereits im Wesentlichen in der Achse der Schweißachse 5 bzw. des Bolzenhalters 15. Das zu verschweißende Teil 19 wird dann mittels eines Ladestifts 23 durch den Bolzenhalter hindurch in dessen vorderen Bereich in eine axiale Position geschoben, in welcher ein Verschweißen des Teils 19 möglich ist. Hierzu muss das Teil 19 selbstverständlich um einen vorbestimmten Überstand d über die Stirnseite des Bolzens hinausragen. Der Ladestift 23 wird von einem in Fig. 1 nur schematisch dargestellten Antrieb 25 beaufschlagt, der üblicherweise als pneumatischer Antrieb ausgebildet ist. Der Antrieb 25 ermöglicht die Bewegung des Ladestifts 23 zwischen einer vorderen Position, in welcher die Stirnseite des Ladestifts 23 die rückwärtige Stirnseite des zu verschweißenden Teils 19 beaufschlagt, und einer zurückgezogenen Position, in welcher der vordere Bereich des Ladestifts 23 so weit zurückgezogen ist, dass der Zuführkanal 21 für das Zuführen eines zu verschweißenden Teils frei ist. Der Antrieb 25 wird ebenfalls von der Mess-, Auswerte- und Steuereinheit 13 angesteuert.

Im Folgenden wird das erfindungsgemäße Bolzenschweißverfahren mittels einer Vorrichtung, wie sie in Fig. 1 dargestellt ist, näher erläutert.

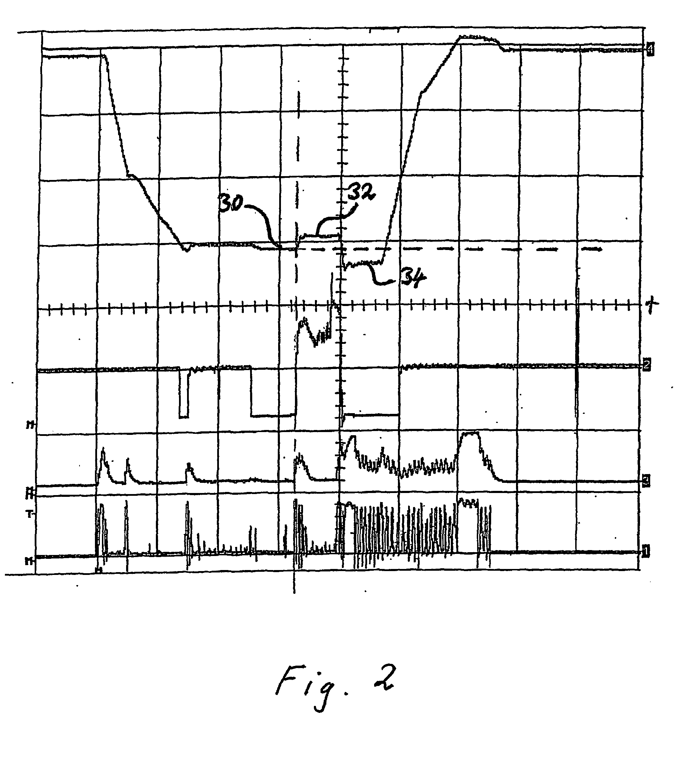

In Fig. 2 sind mittels eines Diagramms typische Kurven eines gesamten Schweißvorgangs dargestellt mit:
- Kurve 1:: Stromverlauf des servoelektrischen Antriebs 7 ohne Glättungsglied
- Kurve 2:: Lichtbogenspannungsverlauf
- Kurve 3:: Stromverlauf des servoelektrischen Antriebs 7 mit Glättungsglied (RC)
- Kurve 4:: Wegverlauf

Kurve 4 zeigt einen für einen Bolzenschweißvorgang mittels Hubzündungsverfahren typischen Weg-Zeit-Verlauf. Hierbei wird die Schweißachse 5 von einer Anfangsposition (1. Quadrant) in Richtung zur Position des Werkstücks 17 bis zur Berührung 30 bewegt (2. Quadrant bis Mitte 4. Quadrant). Hierbei wird das Abhubmaß 32 sowie das Eintauchmaß 34 berechnet bzw. ermittelt. Beim Abheben der Spitze des Bolzens 19 vom Werkstück steigt die Lichtbogenspannung (Kurve 2) von Null an (Einschalten des Vorstroms) und erreicht ihr Maximum im Verlaufe der Einstellung des Abhubmaßes 32. Im Weiteren wird die Schweißachse 5 mit dem Bolzen 19 wieder auf das Werkstück 17 zu bewegt, wobei die Spitze des Bolzens 19 in die durch den Lichtbogen erzeugte Schmelze eintaucht und bis zu einem vorzugsweise einstellbaren Eintauchmaß 34 weiterbewegt wird.

Auf die näheren Details außerhalb der Eintauchphase wie Überschwingen, Prellen o.ä. wird hierbei nicht näher eingegangen, da diese für das erfindungsgemäße Verfahren von nicht wesentlicher Bedeutung sind. Weitere für die Erfindung nicht wesentliche Effekte bzw. Ausschläge sind - abgesehen von Messfehlern und der PWM-Ansteuerung (Pulsweitenmodulation) des servoelektrischen Antriebs 7 sowie etwaige Einschwingverhalten der Weg-Regelung (Abhubmaß, Eintauchmaß usw.) - begründet. Ein gewisses Über- und Unterschwingen im Stromverlauf des Antriebs 7 erfolgt, abgesehen von durch die Regelung verursachten Effekten (Abbremsen), zudem auch durch Massenträgheit der bewegten Teile (im Wesentlichen Schweißachse 5, Bolzen 19, Bolzenhalter 15) und eventuell Schwerkraft (bei nicht waagrechter Schweißlage, wie z.B. Kopflage), so dass nach Überwindung der Massenträgheit (Stromanstieg mit Überschwingung) das zu bewegende Teil bzw. die Schweißachse 5 sich selbsttätig weiterbewegt und einen gewissen "Generatoreffekt" (Abfall des Stroms bis zu einer negativen Unterschwingung) erzeugen kann.

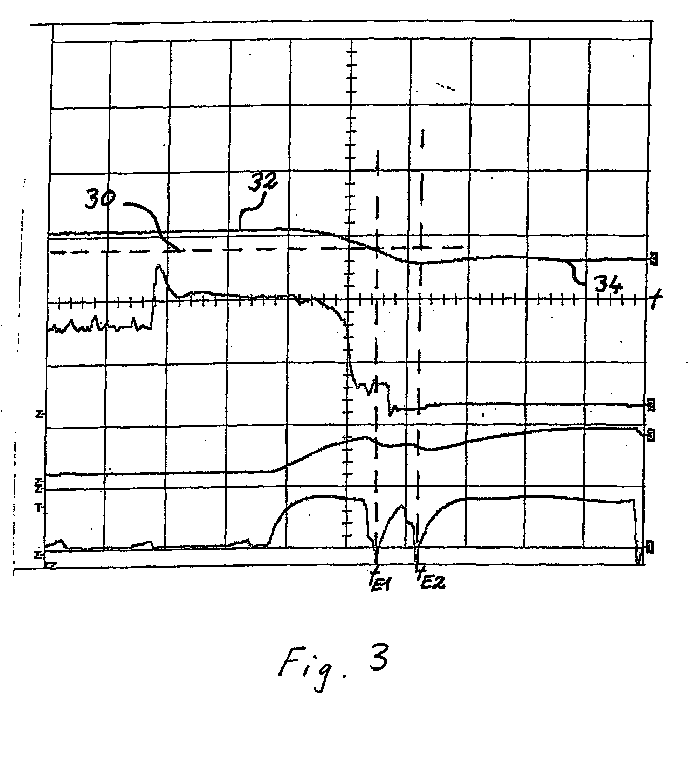

In Fig. 3 ist ein in Richtung der Abszisse (Zeitachse) gedehnter Ausschnitt des 5. und 6. Quadranten (linker und rechter Quadrant der Ordinate) nach Fig. 2 dargestellt, der nachfolgend näher diskutiert wird.

Anhand der bei Kurve 4 (Weg-Zeit-Verlauf) hilfsweise eingezeichneten gestrichelten Linie ist ersichtlich, dass die Bolzenspitze zum Zeitpunkt T_{E1} in die Schmelze eintaucht. Zu diesem Zeitpunkt wird anhand der Kurve 3 und insbesondere der Kurve 1 deutlich, dass die Stromaufnahme des servoelektrischen Antriebs 7 ansteigt. Beispielsweise kann bei einer Regelung der Strom auf eine bestimmte Stromstärke (z.B. 50% oder 70% der maximalen Stromstärke) nach Erreichen einer vorgebbaren Geschwindigkeit (Sollwert) beschränkt sein, so dass bei Eintauchen in die Schmelze aufgrund einer Abbremsung sich die Stromaufnahme erhöht um den Geschwindigkeitssollwert erneut zu erreichen.

Im Zuge des weiteren Eintauchens und Eindringens in die Schmelze kann die Stromaufnahme aber auch wieder aufgrund von Effekten wie beispielsweise höhere Viskosität der Schmelze nach Überwindung der abgekühlten Oberfläche bzw. überwundener Widerstand der Oberflächenspannung fallen. Bei weiterem Eindringen der Bolzenspitze in die Schmelze kann sich die Stromaufnahme dagegen erneut zum Zeitpunkt T_{E2} aufgrund eines höher werdenden Widerstandes durch geringer werdende Viskosität (Abkühlzeit und Tiefe) der Schmelze erhöhen, bis das Eintauchmaß 34 erreicht ist und der Strom für den Antrieb 7 abgeschaltet werden kann.

In der Praxis hat sich gezeigt, dass diese Kurve, insbesondere der erste Anstieg (zwischen T_{E1} und T_{E2}) und eventuelle Abfall nach dem Eintauchen in die Schmelze, besonders aussagekräftig über die Qualität der Schweißung ist, da hierfür der Zustand der Schmelze, insbesondere deren Viskosität, als entscheidender Parameter zum Kurvenverlauf (Kurve 1) beiträgt. Demzufolge können nach der Erfindung rechnerisch oder in mehreren Versuchen, vorzugsweise in Abhängigkeit von Werkstück, Bolzentyp, Schweißstrom und Schweißlage, Sollkurven mit etwaigen Toleranzen, beispielsweise über Mittelwertbildung, erstellt werden, innerhalb welcher sich ein Ist-Verlauf einer Schweißung ausreichender Güte bewegen muss.

Hierbei ist es vorteilhafterweise möglich, für den Antriebsstrom einen Schwellwert zu definieren, bei dessen Erreichen bzw. mit zusätzlicher vordefinierter Zeitverzögerung der Antriebsstrom abgeschalten wird. Hierdurch können Beschädigungen und Veränderungen der Positionen, wie beispielsweise Verschieben des Werkstücks und/oder der Schweißvorrichtung, vermieden werden.

Selbstverständlich sind die dargestellten Kurven nur beispielhaft zu verstehen und hängen in ihrer Form stark von Fertigungsparametern (wie beispielsweise Typ des Bolzens, des Werkstücks, der Schweißung usw.) ab. Es hat sich jedoch in Versuchen gezeigt, dass sich für unterschiedliche Verhältnisse charakteristische (Soll-)Kurven ermitteln lassen, die eindeutige Aussagen über die Qualität einer Schweißung ermöglichen.

In weiterer Ausgestaltung der Erfindung können verschiedene Ereignisse, wie beispielsweise "Eintauchen T_{E1}", statt über eine zusätzliche Wegmesseinrichtung auch über eine Auswertung der Kurve 3 bzw. vorzugsweise Kurve 1 und Suche nach prägnanten Ereignissen, wie beispielsweise erste positive Flanke nach Erreichen des Abhubmaßes oder nach längerer Stromaufnahme (für Abhubmaß und Abfall) oder Form und Dauer der entsprechenden Kurvensegmente usw., ermittelt werden.

Zusätzlich ist es denkbar, das Auswertungsergebnis zu einer Steuerung bzw. Regelung des Antriebs 76, vorzugsweise mittels einer digitalen Regelung, zu verwenden, so dass voreingestellte Sollwerte bzw. Sollkurven inkl. Toleranz vorgebbar sind und erfindungsgemäß eine Aussage über Qualität bzw. Güte der Schweißung getroffen werden kann.

Hierdurch ist es beispielsweise möglich, bei einer Großzahl von vorgenommenen Schweißungen nur diejenigen in zusätzlichen Arbeitsgängen auf Güte zu überprüfen, welche anhand direkter Meldung oder anhand eines Protokolls als möglicherweise fehlerhaft, also außerhalb der Toleranz der Sollkurve, und demzufolge beispielsweise nicht ausreichend haltbar befunden wurden. Insbesondere beim Aluminiumschweißen verringern sich die Fertigungszeit und -kosten in hohem Maße, da hier bisher alle Schweißungen auf Haltbarkeit, beispielsweise manuell mittels Akkuschrauber, nachträglich überprüft werden mussten.

Weiterhin ist es denkbar, die ermittelten Ist-Verläufe eventuell zusammen mit weiteren Parameterkurven, wie Weg-Zeit-Kurve, Schweißstromkurve, Lichtbogenspannungskurve usw. eines Schweißvorgangs, insbesondere der Eintauchphase und Parametern wie Abhubmaß, Typ des Werkstücks und des Bolzens usw. hinsichtlich für die Qualität einer Schweißung auffälliger Charakteristika zu untersuchen und zu klassifizieren. Anhand einer solchen Klassifizierung ist es vorteilhafterweise möglich, Soll-Kurven für eine Prozesssteuerung bzw. Regelung zu ermitteln, anhand welcher Schweißungen gesteuert werden können. Zu diesem Zweck kann die Mess- und Auswerteeinrichtung zusätzlich als Steuereinrichtung ausgebildet sein oder das ausgewertete Signal einer eigenständigen Steuereinrichtung zugeführt werden, welche die Steuerung des Antriebs der Schweißachse bzw. Pinole und/oder eines Roboterarms in Abhängigkeit des ausgewerteten Signals vornimmt und entsprechend vorgebbarer Sollwerte bzw. -kurven (im Vergleich mit jeweils detektierten Ist-Werten) regelt

Selbstverständlich sind das erfindungsgemäße Verfahren sowie die Vorrichtung nicht auf das dargestellte Ausführungsbeispiel beschränkt, sondern in beliebigen Bolzenschweißverfahren (Hubzündungs-, Spitzenzündungsverfahren usw.) mit beliebigen Bolzenschweißvorrichtungen (Schweißkopf eines Automaten oder Roboterarms, Schweißpistole usw.) anwendbar. Hierbei ist der Begriff "Bolzen" nach der Erfindung nicht eng, sondern weit zu verstehen, so dass ein beliebiges zu verschweißendes Teil, welches mit einem Ende oder einer Seite an ein Werkstück angeschweißt werden soll, unter diesen Begriff fällt.

## Patentansprüche

1. Verfahren zur Überwachung des Schweißvorgangs beim Bolzenschweißen mittels Hubzündungsverfahren, bei dem
a) ein zu verschweißendes Teil (19) durch Bewegung des Teils (5) in Richtung auf ein Werkstück (17) zu in die Schmelze eingetaucht wird,
**dadurch gekennzeichnet**,
b) dass die von der aufzuwendenden Kraft für die Bewegung des Teils (5) abhängige Leistungsaufnahme (Kurve 1) eines elektrischen Antriebs (7) zur Bewegung des Teils (5) über die Zeit der Eintauchphase des Werkstücks (17) in die Schmelze gemessen wird und
c) dass der gemessene Leistungsaufnahme-Zeit-Verlauf mit einem vorbestimmten Soll-Verlauf verglichen wird.

2. Verfahren nach Anspruch 1, **dadurch gekennzeichnet, dass** bei Überschreiten vorgegebener Toleranzen ein Fehlersignal erzeugt wird und der Fehler vorzugsweise optisch oder akustisch angezeigt wird.

3. Verfahren nach Anspruch 1 oder 2, **dadurch gekennzeichnet, dass** der Soll-Verlauf und/oder die vorgegebenen Toleranzen von der während des Schweißvorgangs zugeführten Energie abhängig sind.

4. Verfahren nach einem der vorhergehenden Ansprüche, **dadurch gekennzeichnet, dass** der gemessene zeitliche Verlauf der Leistungsaufnahme protokolliert und/oder gespeichert wird.

5. Mess- und Auswerteeinrichtung (13) für eine Hubzündungsbolzenschweiß- Vorrichtung zur Durchführung eines Verfahrens nach den Ansprüchen 1 bis 4, **dadurch gekennzeichnet, dass**
a) die Mess- und Auswerteeinrichtung (13) Mittel für das Messen der von der aufwendenden Kraft eines elektrischen Antriebs (7) abhängigen Leistungsaufnahme und
b) Mittel für das Vergleichen dieser Leistungsaufnahme mit einer vorgebbaren Sollkurve aufweist.

6. Hubzündungsbolzenschweiß-Vorrichtung (1) zur Durchführung des Verfahrens nach einem der vorhergehenden Ansprüche
a) mit einem Schweißkopf (3) mit einem steuerbar bewegbaren Teil (5), an dem ein Bolzenhalter (15) zur Aufnahme eines zu verschweißenden Teils (19) angeordnet ist,
b) wobei der Schweißkopf einen elektrischen Antrieb (7) zur Bewegung des Teils (5) aufweist, **dadurch gekennzeichnet**,
c) dass die Bolzenschweiß-Vorrichtung (1) eine Mess- und Auswerteeinrichtung (13) gemäß Anspruch 5 aufweist, welcher zur Erfassung der aufzuwendenden Kraft für die Bewegung des steuerbar bewegbaren Teils (5) ein von der aufzuwendenden Kraft abhängiges Signal zugeführt ist,
d) dass als das von der aufzuwendenden Kraft abhängige Signal die Leistungsaufnahme des elektrischen Antriebs (7) dient und
c) dass, während der Benutzung der Hubzündungsbolzenschweiß- Vorrichtung, die Mess- und Auswerteeinrichtung (13) für das Treffen einer Qualitätsaussage hinsichtlich der fertigen Schweißverbindung den zeitlichen Verlauf des Signals zumindest während der gesamten Bewegungsphase in Richtung des Eintauchens des Bolzens in die Schmelze erfasst und den zeitlichen Verlauf (Kurve 1) des Signals mit einem vorbestimmten Soll-Verlauf vergleicht.

## Claims

1. Method of monitoring the welding operation during stud welding by means of lift-and-strike methods, whereby
a) a part (19) to be attached by welding is dipped into the molten material by moving the part (5) in the direction of a workpiece (17),
**characterized in**
b) that the power input (curve 1), which is dependent upon the force to be expended for movement of the part (5), of an electric drive (7) for moving the part (5) is measured over the time of the dipping phase of the workpiece (17) into the molten material and
c) that the measured power input-time characteristic is compared with a predetermined setpoint characteristic.

2. Method according to claim 1, **characterized in that**, when preset tolerances are exceeded, an error signal is produced and the error is preferably visually or audibly indicated.

3. Method according to claim 1 or 2, **characterized in that** the setpoint characteristic and/or the preset tolerances are dependent upon the energy supplied during the welding operation.

4. Method according to one of the preceding claims, **characterized in that** the measured time characteristic of the power input is logged and/or stored.

5. Measuring and evaluating device (13) for an arc stud welding apparatus for effecting a method according to claims 1 to 4, **characterized in that**
a) the measuring and evaluating device (13) comprises means of measuring the power input, which is dependent upon the expending force of an electric drive, and
b) means of comparing said power input with a definable setpoint curve.

6. Arc stud welding apparatus (1) for effecting the method according to one of the preceding claims
a) having a welding head (3) with a controllably movable part (5), on which is disposed a stud holder (15) for receiving a part (19) to be attached by welding,
b) wherein the welding head comprises an electric drive (7) for moving the part (5),
**characterized in**
c) that the stud welding apparatus (1) comprises a measuring and evaluating device (13) according to claim 5, to which a signal dependent upon the force to be expended is supplied for determining the force to be expended for the movement of the controllably movable part (5),
d) that, as the signal dependent upon the force to be expended, the power input of the electric drive (7) is used and
e) that during use of the arc stud welding apparatus the measuring and evaluating device (13) for making a quality report regarding the finished welded joint acquires the time characteristic of the signal at least throughout the phase of movement in the direction of dipping of the stud into the molten material and compares the time characteristic (curve 1) of the signal with a predetermined setpoint characteristic.

## Revendications

1. Procédé de contrôle du processus de soudage lors du soudage de goujons au moyen de procédés de soudage à arc tiré, dans lequel
a) une partie à souder (19) est plongée dans le bain en fusion en déplaçant la partie (5) en direction d'une pièce à fabriquer (17),
**caractérisé en ce que** :
b) l'on mesure la puissance, qui dépend de la force à appliquer pour déplacer la partie (5), consommée (courbe 1) par un entraînement électrique (7) pour déplacer la partie (5) pendant la durée de la phase de plongée de la pièce à fabriquer (17) dans le bain fusion, et
c) l'on compare l'allure de la puissance consommée mesurée en fonction du temps avec une allure théorique prédéterminée.

2. Procédé selon la revendication 1, **caractérisé en ce que**, en cas de dépassement de tolérances prédéfinies, un signal d'erreur est généré et l'erreur est signalée de préférence optiquement ou acoustiquement.

3. Procédé selon la revendication 1 ou la revendication 2, **caractérisé en ce que** l'allure théorique et/ou les tolérances prédéfinies sont dépendantes de l'énergie fournie pendant le processus de soudage.

4. Procédé selon l'une des revendications précédentes, **caractérisé en ce que** l'allure de la puissance consommée mesurée en fonction du temps est consignée et/ou mémorisée.

5. Dispositif de mesure et de traitement du signal (13) pour un dispositif de soudage de goujons à arc tiré destiné à réaliser un procédé selon les revendications 1 à 4,
**caractérisé en ce que**
a) le dispositif de mesure et de traitement du signal (13) comprend des moyens pour mesurer la puissance consommée, dépendante de la force à appliquer, d'un entraînement électrique (7), et
b) des moyens pour comparer cette puissance consommée avec une courbe théorique prédéfinissable.

6. Dispositif de soudage de goujons à arc tiré (1) pour réaliser le procédé selon l'une des revendications précédentes
a) avec une tête de soudage (3) comprenant une partie mobile de manière commandable (5) sur laquelle est disposé un porte-goujon (15) destiné à recevoir une partie à souder (19),
b) la tête de soudage comprenant un entraînement électrique (7) pour déplacer la partie (5),
**caractérisé en ce que**
c) le dispositif de soudage de goujons (1) comprend un dispositif de mesure et de traitement du signal (13) selon la revendication 5 auquel est appliqué un signal dépendant de la force à appliquer afin de détecter la force à appliquer pour déplacer la partie mobile de manière commandable (5),
d) la puissance consommée par l'entraînement électrique (7) est utilisée comme signal dépendant de la force à appliquer, et
e) pendant l'utilisation du dispositif de soudage de goujons à arc tiré, le dispositif de mesure et de traitement du signal (13), afin de permettre de juger de la qualité de la liaison soudée finie, détecte l'allure du signal dans le temps, au moins pendant la totalité de la phase de déplacement dans le sens de la plongée du goujon dans la fusion, et compare l'allure dans le temps (courbe 1) du signal avec une allure théorique prédéfinie.
